# EUROPEAN PATENT SPECIFICATION

(11) **EP 1 294 642 B1**
(45) Date of publication and mention of the grant of the patent: **16.08.2006**
(21) Application number: 01939966.6
(22) Date of filing: 01.06.2001
(51) Int. Cl.: C02F 1/52

(54) **METHOD FOR TREATMENT OF WATER CONTAINING HUMIC MATTER FOR THE PRODUCTION OF DRINKING WATER WITH ENHANCED COAGULATION STAGE USING INORGANICS POLYMERS OF AL AND ACTIVATED SIO2**
VERFAHREN ZUR BEHANDLUNG VON MIT HUMINSTOFFEN BELASTETEM WASSER ZUR HERSTELLUNG VON TRINKWASSER MIT VERBESSERTER KOAGULIERUNGSTUFE MITTELS INORGANISCHEN AL-POLYMEREN UND AKTIVIERTEM SIO2
PROCEDE DE TRAITEMENT D'EAU CONTENANT DES MATIERES HUMIQUES DESTINE A LA PRODUCTION D'EAU POTABLE AVEC ETAPE DE COAGULATION AMELIOREE A L'AIDE DE POLYMERES INORGANIQUES D'AL ET DE SIO2 ACTIVE

(30) Priority: 06.06.2000 YU 35300
(43) Date of publication of application: 26.03.2003
(73) Proprietor: Perisic, Mileta, 11000 Beograd (YU)
(72) Inventor: Perisic, Mileta, 11000 Beograd (YU); Rackovi, Ljilana, 11000 Beograd (YU)
(74) Representative: Adam, Holger
(86) International application number: PCT/YU2001/000012
(87) International publication number: WO 2001/094265

(56) References cited:
- FR-A- 2 513 619
- FR-A- 2 555 980
- US-A- 5 023 012
- DATABASE WPI Section Ch, Week 199431 Derwent Publications Ltd., London, GB; Class D15, AN 1994-251942 XP002178792 & JP 06 182355 A (TAKI CHEM CO LTD), 5 July 1994 (1994-07-05)
- EIKEBROKK B.: 'COAGULATION-DIRECT FILTRATION OF SOFT, LOW ALKALINITY HUMIC WATERS' WATER SCIENCE AND TECHNOLOGY vol. 40, no. 9, 1999, ELMSFORD, NY, US, pages 55 - 62, XP001147544
- ODEGAARD H.; EIKEBROKK; STORHAUG R.: 'PROCESSES FOR THE REMOVAL OF HUMIC SUBSTANCES FROM WATER - AN OVERVIEW BASED ON NORWEGIAN EXPERIENCES' WATER SCIENCE AND TECHNOLOGY vol. 40, no. 9, 1999, ELMSFORD, NY, US, pages 37 - 46, XP001147543

## Description

### a) Field of technique to which inovation belong

This inovation belong to the field of water treatment, closer, to the field of drinking water treatment, and refers to the method for removal humic matters from natural water which present most wide sprad of organic pollution of natural water on broad area. Coagulation and separation processes, as one of the more representing methods for removal of humic matter from natural water are realized today by using different coagulants with partial success. The main problems are in the domain of treatment of soft and hold waters with humic matter which are very vide spread.

According to the international clasification of the patents (ICP) object of inovation is indicated with basic classification symbols Cl. C 02F1/52.

### b) Technical problem

The gratest problem of purification of natural waters to drinking water standards is separation of humic matter, because they, amoung others, in the desinfection with chlorine give numerous halogenorganic maters with cancerogenous and mutagenous properties. For solving of this problem many methods use today, amoung others till now used dominant conventional technology of coagulation. All these technique have partial success, and there are intensive efforts for dissolving of this problem. Problems in coagulation of soft water with humic matter are esspecialy pronounced. Even more pronounced problem is coagulation of this type of water in cold climate, which is a frequent case.

With this inovation important effect of the coagulation process and separation from raw water of humic matter of diferent characteristics is obtained. With this inovation high improvement in coagulation in the case of purification of soft water with humic matter, even at exstremly low temperature can be achieved.

With this inovation, from some type of raw water, effect of reduction of organic matter till drinking water standard (consumption KMnO₄ smaler then 8,0 mg/l), and for water with high organic content better purification results with smaller investment in the following phases of purification is obtained.

Solution in inovation is : simple, fast, effective and economic solution for removal of humic matter from raw water with minimum changes in ionic content, without organic floculant and without limitation of folowing phases purification of drinking water.

### c) State of technic

Purification of the natural water with humic matter, for drinking water, is realized today, with several technological solutions : conventional treatment including several processes (coagulation with different schemes of flock separation), removal of humic matter on the membrane (ultrafiltration, nanofiltration and revers osmoses), oxidation with biofiltration and sorption processes.

In phase of purification of raw water with coagulation of suspended matter and partly colloidal and dissolved organic matter are removed.

For coagulation different scheme of the treatment are used today, A1 and Fe salts with auxiliary coagulants for treatment of different types of the water. As auxiliary coagulant activated SiO₂ and different organic polymer are used .

For improvement of coagulation processes new salts are sintetized, inorganic polymers giving in the water polinuclear complex hidroxo-aluminium ions with cationic properties. Type of anions in the molecule enable polymerization giving to it properties of flocculation matter which is very important for water difficult for flocculation.

On the west market they are : PAC *(Florger, France),* WAC *(Atochem, France),* Megaflok *(La-TOP, Austria)* etc., and in our country Koaflok (Patent P-551/95, *Chem. Ind. 'Zupa' YU*)*.*

Great number of patented solutions give a spectre of Al complex salts. The best, today, is the one which contains maximum homologs with 13 Al atoms in polymer, obtained by electrochemical procedure (Japan patent 24354 and 24355).
Moreover, the French patent application FR-A 2 513 619 discloses a coagulation/flocculation process for the purification of river water using an aqueous alkaline solution of sodium silicate as an auxiliary coagulant in combination with Fe₂O₃ or Al₂O₃.
Furthermore, Eikebrokk et al. *(Wat. Sci. Tech.* Vol. 40, No. 9, pp. 37-46, 1999 and *Wat. Sci. Tech.* Vol.40, No. 9, pp. 55-62, 1999) describe processes for the removal of humic substances from water using Al-based coagulants. In these processes the corresponding pH values have to be adjusted to a specific range and after removing the humic substances the pH has to be readjusted using Ca(OH)₂ and/or CO₂.

Unfortunately, still special problem is presented with water containing humic matter, especially soft water and coagulation in the low temperature conditions. Application of classical schemes of water treatment need enormous quantity of Al or Fe salts with low effects of purification. On the low temperatures purification of water with low ionic content with inorganic Al polymers cannot give flock, that is that reason the existing technological schemes, having the best filters cannot remove humic mater from water, as is confirmed by new data presented on the International Conference about "Removal of Humic Substances from Water" held in Norway 1999.

In the case of insufficient efficiency of removal of humic matter from water in addition several phases of the treatment are used: oxidation with ozone, sorption on the GAC, by that whole process is complicated and cost for treatment including capital cost and exploitation cost increase significantly.

Humic matter produce numerous problems in water supply (they give colour, products of oxidation are degraded in water supply system serving as food for microbiological processes, with chlorine gives many halogenorganic substances, amoung them according to new data, chlorohydroxyfuranones are extremely important mutagens), and their removal from water is one of the priority tasks. In our country bacase of complexity and high treatment costs water containing humic matter is purified only partly, or purification don't exist. With demands for limitation of content purgable of halogenorganic matter in drinking water, removal of humic matter from raw water is placed as priority.

In the numerous water supply systems in our country : system for water supply on the Kopaonik, water reservoirs like Divcibare and others reduction of organic matter (consumption of KMnO₄) isn't in drinking water standard range, ground water with very high organic content like Kikinda, Zrenjanin and other are used without treatment except chlorination.

### d) Presentation of the essence of inovation

Inovation given by this method is in great improvement of efficiency of humic matter coagulation obtained with mutual effects of two polymers, Al complex salts and activated SiO₂ in favorable pH range.

The essence is in the effect of neutralization of electricity on the moleculs of humic substances with this two pollymers and entrance of humic macromolekul in stable floc and it's effective removal from water.

Changable content of humic matter in the natural waters of different origin, as well as changes on the water sources with time, as is the case some surface water recuire changes in the fazes of coagulation. This is obtained by the chages of content of these two polymers. This relation, expressed as Al₂O₃ : SiO₂, according to experimental results for different types of water is betwen 6 : 1 to 3 : 1.

Adaptation of relative ratio of two inorganic polymers as well as their real quantity to the type of humic matter in water is a part of the patented technology, inovation. Only good estimation of quantity and ratio of these two polimers for treated water give possibility for generation of stable floc and effective purification of drinking water, it is established as condition for application of this method.

Natural water with humic mater frequently have unpleasant ionic content, frequently due to shortage Ca and Mg. Adaptation of pH for optimisation of the coagulation and removal of humic matter frequently need of later neutralization with Ca(OH)₂ and CO₂, according to this conditions for improuvment of mineralization of drinking water are obtained.

Additional problem of loading of the scheme of the removal of humic matter by coagulation is high content of rezidual Al in the drinking water, and which is successfuly eliminated using this method, whose corect application is garant for obtaining of the most strict standards.

Inovation is tested in laboratory conditions, jar test, while only phase Al polimer application condition is tested in sity, that is giving data for conclusion about improvement effects of purification obtained by laboratory jar test.

In the application this method does not have special demands compared to conventional coagulation process. As for conventional system, in jar test, phases of the coagulation and sedimentation are in domain : rapid mixing with 200 r/min. (2 min.), slow mixing with 15 - 30 r/min (10 min.) and precipitation cca. 20 min. by which this phase of purification is s finished. Process on the instalation is deffined by conditions of the instalation.

Adjustment of optimum pH, for the greatest number of water is in the range 5.5 to 6.5 (if it is necesary), realized before coagulants dosage with some of mineral acids (H₂SO₄, HCl or with cationic resin H+ type), in that way with minimum changes on the ionic content, or that is all time in range of the drinking water quality standards, like this realized with Al₂(SO₄)₃18H₂O. For the natural water with low pH, type of water source on Kopaonik, adjustage of pH isn't nessesary, (excluding possible changes of water quality during a year when situation expect this), and finaly neutralization will be realized with Ca(OH)₂ before filtration.

Dozage of the coagulant, Al polimer and activated SiO₂ is realized just before rapid mixing, and later adjustment of pH (if it is necessary) is realized after sedimentation.

Inorganic polymer is dosed without disolution, or in the range of disolution allowed by the producer, when worked with concentrated substances.

Activation of amorphous SiO₂ is realized by neutralization of alkalinity, 1,0 % solution, which imediately is diluted to 0.1 - 0.05 % solution with slow, mixing providing activity of SiO₂ for many hours use.

The doses of A1 polimer and activated SiO₂ are deffined for a concrete case of purification and can vary in broad range, for Al polimer 2.0 - 25 mg/l Al₂O₃ and activated SiO₂ from 0.5 - more than 5.0 mg/l.

### e) Short ilustration of figure of the plan

Investigations in laboratory conditions were realized with standard methodology, by jar test with propeler mixer changable speed from 10 - 200 r/min., which provided realization of experiments in defmed conditions : rapid and slow mixing.

For investigation different comercial polimer : PAC, Megafloc and Koaflok were used. Mostly experiment were realized with Koaflok.

Process of purification of raw water by coagulation with separation floc on the instalation has phases given in the scheme 1.: Adjustment of the pH (if it is necessery), dosing of the koagulants (A1 polimer and activated SiO₂) with mixing phases (rapid and slow mixing) and finally sedimentation and filtration. Adjustment of the pH before phase of coagulation (if it is necessary) is realized by dozing of mineral acids or by filtration of some part of the water flow (about 15 % and more persent, depanding on expected pH and type of water) trough column with H+ resin. Water for acidification is taken from basic flow, raw water, or after sedimentation of filtration phases protecting H+ rasin polution. Neutralization of treated water is realized before filtration phases.

The method permits other purification schems. This is related to existing instalations, for example these with coagulation/direct filtration. In this case effects of the process is dependant on concentration of humic matter, or coagulant doses, because the filter run is depandant on these parameters.

### f) Detailed description of the inovation

To the raw water, before adjustment of the pH to app 5.5 - 6.5 range (if raw water isn't in this in the source), and reduction of biologic activity (in the case treatment of the surface water resources is realized, desinfection in first step if the biologic activity limit sedimentation process), inorganic polimer Al and Si02 is added, pass through phases of rapid and slow mixing and after that removed floc by sedimentation during about 30 min, according to the standard procedure of jar test. Under the plant conditions realization of the procedure is defined by characteristics of the instalation.

Adjustment of the pH (for the raw waters with low mineralization adjustment is realized with some of mineral acids : H₂SO₄ or HCl, but for waters with high bufer capacity where exist possibility for degradation of ionic content and water quality this realized by use of H+ cationic resin) for optimal effects of purification is realized on the begining of the process. Posible later corections, adjustment to range defined by drinking water standards and improvement water stability is realized after sedimentation, but before phase of filtration.

Efficiency of the removal of humic matter is depandant on the conditions of the procedure and for optimal conditions : doses of complex Al salts and activated SiO₂, as well as optimal pH value are defined for each case separately. For the ground water resources these values are stable, but for surface water they must be adjusted according to changes of characteristics of the treated water.

All process is controled by some parameters of the water quality that give data about effect of the purification : turbidity, consumption of KMnO₄, colour, uv-extincion, PTHM *(Trichalomethane Formation Potential)* and residual A1 concentration.

All results of jar tests are related to characteristics of decanted water. Only some results refered to filtred water will be pointed out.

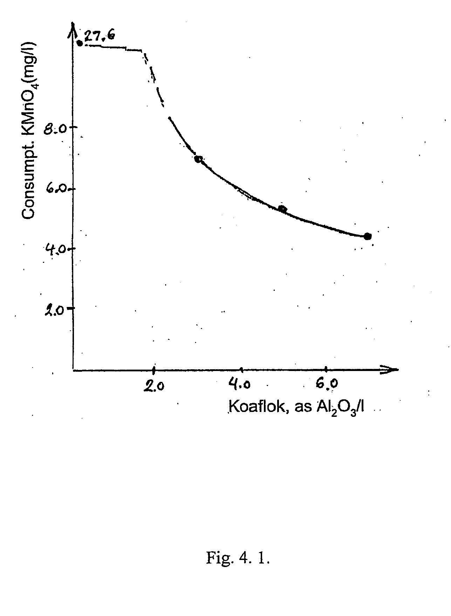

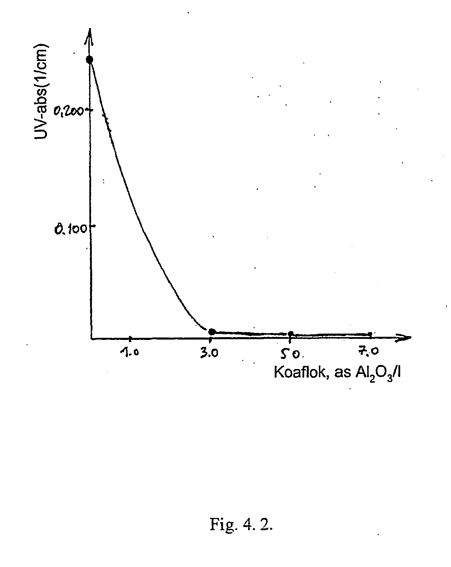

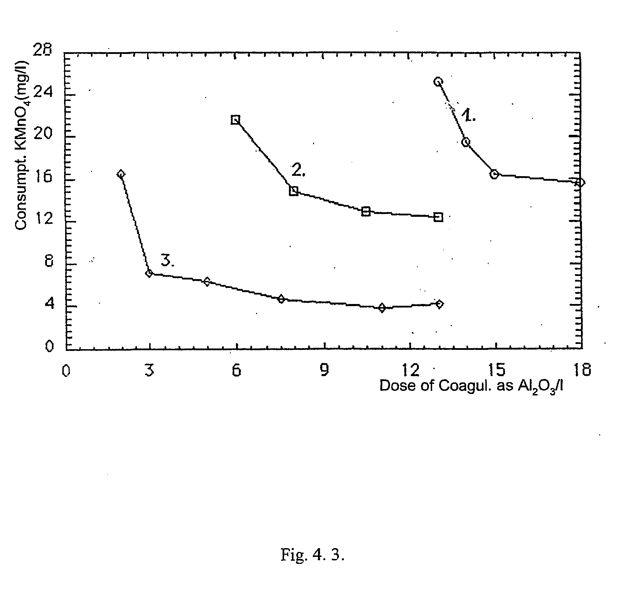

By using inorganic polymer Al and activated SiO₂ as auxiliaty coagulants, by controling pH in the optimal range iprouvement of coagulation process and integral effects of purification compared to conventional treatment are obtained :
- reduction of organic matters, especialy humic matter, from water (calculated as consumption of KMnO₄ from 70 to 90 %),
- high percent of organic matter as uv-extintion is remuved, which is very important according to the fact that this matter is the main precursor of halogenorganic matters (effects this reduction are in special cases 90 %),
- process of coagulation and separation is intensified even with extremly low temperature (process coagulation and sedimentation of water on Kopaonik is realized indepandant of low temperature),
- it reduces content of the THM *(Trichalomethanes, sum: CHCl3, CHCl2Br, CHClBr2, CHBr3)* prekursors in the purified water, rarely lower to MLC *(Maximum Contaminant Level)* in the drinking water (PTHM reduced about 90 %),
- it attained especially important effects in the reduction value of colour even more then 95 %,
- it attained extremely low concentration of residual Al in drinking water (for corectly performed coagulation process concentration Al is lower then 0.050 mg/l, according to this the most strict standard for drinking water quality is provided,
- it reduces consumption of Al salts (consumption Al is reduced for 2 to more then 5 times, compared to conventional treatment with As sulphate even with very high effects of purification, as the case of water purification from accumulation on the Divcibare, fig. 4.3.),
- it reduces effects to the environment from mud from drinking water facilities from 50 - 80%.

All cited parameters present more effective enhanced coagulation then that postuled by US EPA (1998).

Presented examples of laboratory investigation ilustrate this conclusions.

### Example 1. Results of laboratory investigations purification effects of ground water in Kikinda

Raw water has following characteristics : pH = 8 - 8.2, turbidity = 0.60 NTU, consumption of KMnO₄ = 28-30 mg/l, uv-ext. = 0.300 1/cm, PTHM = 350 µg/l, and CHCl₃ = 300 µg/l.

By coagulation and sedimentation according to jar test methodology with optimum doses: koaflok (15 mg Al₂O₃/l), SiO₂ (2 mgSiO₂/l) i with pH near 7.0 water of characteristics was obtained : turbidity = 0.40 NTU, consumption of MnO₄ = 9.4 mg/l, uv-ext. = 0.076 l/cm.

Better effects of reduction of organic matter, consumption of KMnO₄ = 8.6 mg/l, is obtained with dosse of 10 mg Al₂O₃ at pH = 6.0. Lowering pH is limited by increasing of ionic strenght and sulphate or chloride content. Equivalent effects are obtained by ussing H+ cationic resin with simultaneous reduction of treated water hardness. This method need somewhat higher more investment, but it provides hardnes of the treated water in the range of drinking water quality standard.

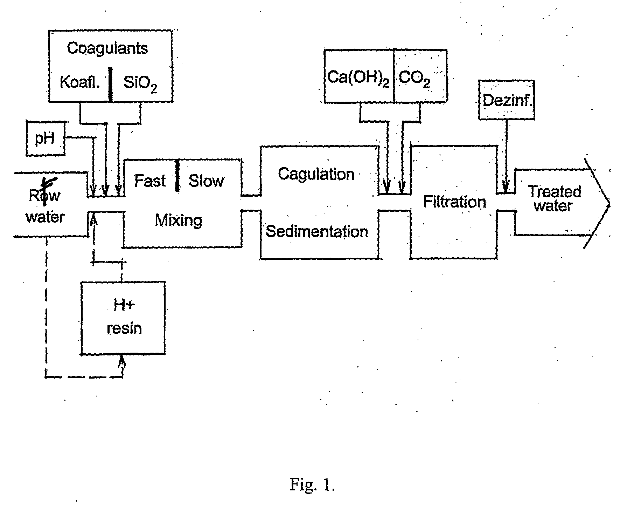

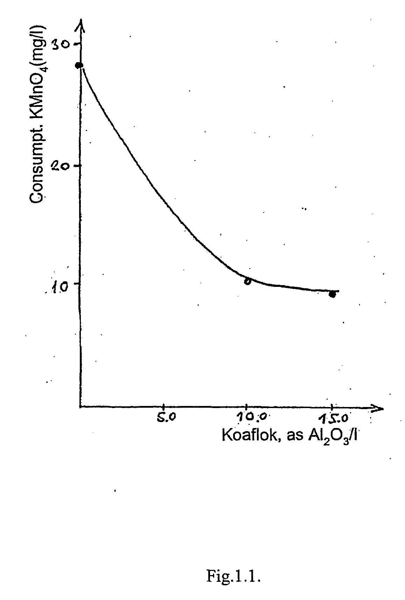

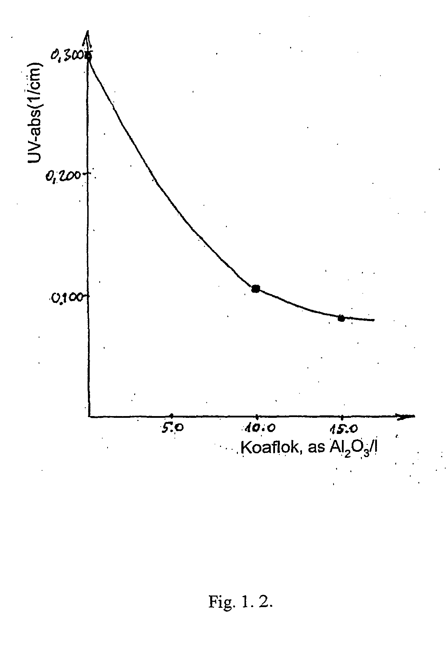

On the fig. 1.1., and 1.2., some results of depandance of degree of the reduction of organic matter (consumption KMnO₄) and uv-extinction (as parameters water quality) in function of doses koaflok are given. In full-scale conditions, with effects of filtration, expected improvement of water quality and reduction of koaflok doses of about 20 %.

### Example 2. Results of laboratory investigation purification effects of ground water of Zrenjanin

Raw water has folloving characteristic : pH = 7.7 - 8.2, turbidity = 1.5 - 2.8 NTU, consumption of KMnO₄ = 52 mg/l, uv-ext. = 0.300 1/cm, colour = 50 - 60.

By coagulation and sedimentation according to jar test methodology with optimum doses : koaflok (20 mg Al₂O₃/l), SiO₂ (4 mgSiO₂/l) i with pH near 7.0 water following characteristics was obtained : turbidity = 0.65 NTU, consumption KMnO₄ = 16.1 mg/l, uv-ext. = 0.144 1/cm, colour = 5 mg Pt/l.

Better effects of organic matter reduction were obtained by lowering pH by using H+ cationic resin which limited increased hardness of water. This was obtained by passing some part, about 15 % or more persent through H+ cationic resin with simultaneous reduction of treated water hardness. This method need more investment, but it provide of treated water hardnes in the range of drinking water quality standards.

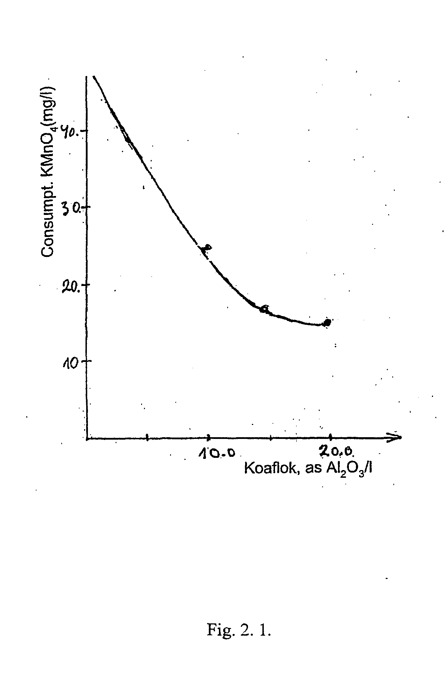

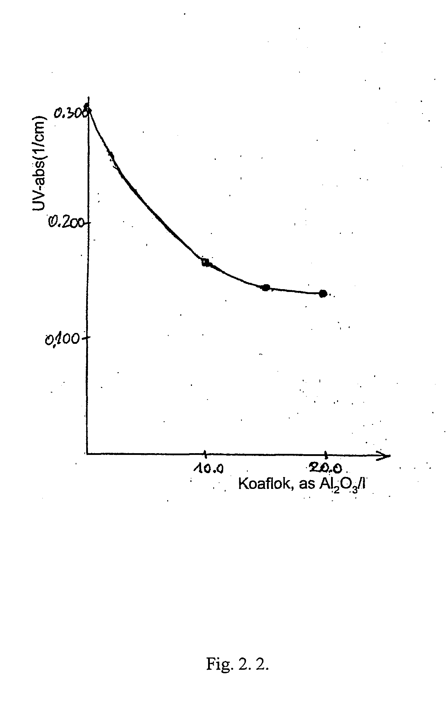

On the fig. 2.1., and 2.2., some results of depandance degree of the organic matter reduction are given (consumption KMnO₄) and uv-extincion (as parameters of water quality) in function of koaflok doses.

### Example 3. Results of laboratory investigation of purification effects of surface water on Kopaonik.

Raw water has changable characteristics : pH = 5.2 - 7.5, turbidity about 0.6 NTU, consumption KMnO₄ = 8.6 - 12.7 mg/l, uv-ext. = 0.09 - 0.115 1/cm, colour = 15 mgPt/l, PTHM = 150 - 230 µg/l, and CHCl₃ = 120 µg/l.

Characteristics of this water are in the low ionic content and low temperature (parameter limiting coagulation possibility) and with high specific yield THM, as defined needed degre of humic mater reduction in the case of desinfection with chlorine.

By coagulation and sedimentation according to jar test methodology with optimum doses : koaflok (3 mg Al₂O₃/l), SiO₂ (0.5 - 1.0 mg SiO₂/l) with pH near 7.0 water following characteristics was obtained : turbidity = 0.25 NTU, consumption KMnO₄ = 4.04 mg/l, uv-ext. = 0.005 1 /cm, colour = 0.5 mg Pt/l, PTHM = 65 µg/l, and CHCl₃ = 30 µg/l.

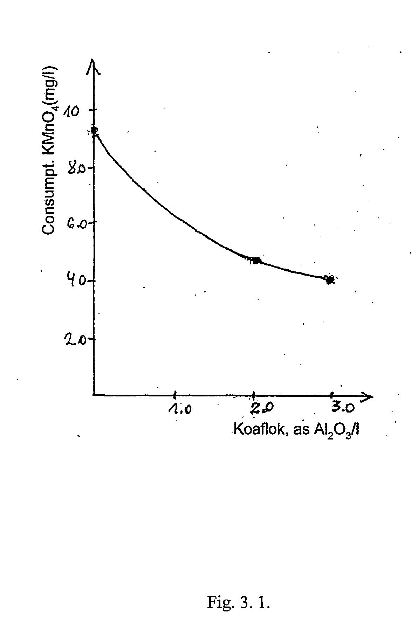

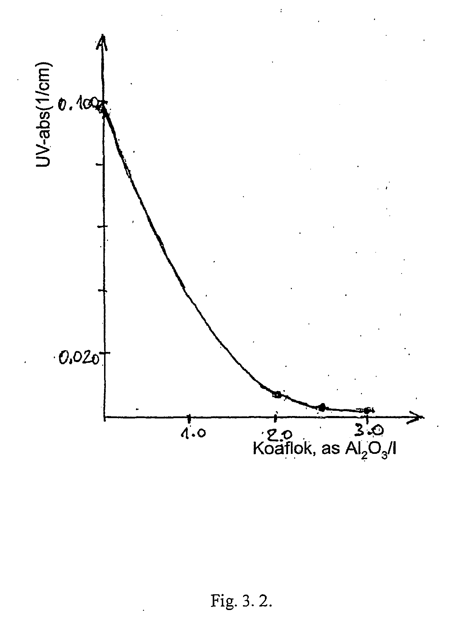

On the fig. 3.1., and 3.2., some results of depandance degree of the organic matter reduction are given (consumption KMnO₄) and uv-extincion (as parameters of water quality) in function of koaflok doses.

### Example 4. Results of laboratori investigation of surface water effects purification from accumulation Divcibare

Raw water has characteristics : pH = 7.1., turbidity about 3.0 NTU, consumption KMnO₄ = 26 mg/l, uv-ext = 0.210 1 /cm, colour = 20 mgPt/l, PTHM = 650 ug/l, and CHCl₃ = 500 µg/l.

Characteristics of this water is in the low ionic content and low temperature (parameter limiting coagulation possibility) and with high specific yield THM, which defined needed degre of humic mater reduction in the case of desinfection with chlorine.

By coagulation and sedimentation according to jar test methodology with optimum doses : koaflok (3.5 mg Al₂O₃/l), SiO₂ (1.0 mg SiO₂/l) with pH near 7.0 water of following characteristics was abtained : turbidity = 0.18 NTU, consumption KMnO₄ = 4.0 mg/l, uv-ext. = 0.005 1/cm, colour = 0 mg Pt/l, PTHM = 65 µg/l, and CHCl₃ = 30 µg/l.

### Example 4.1. In other condition surface water from hipolimnion of this accumulation Div]ibare had diferent characteristics, higher consumption of KMnO₄, higher uv-extincion and higher demand for coagulants.

Raw water has had the following characteristic : pH = 7.3., turbidity about 3.8 NTU, consumption KMnO₄ = 32 mg/l, uv-ext. = 0.268 1/cm, colour = 33 mgPt/l.

After adjustment of pH to 6.0 coagulant is dozed: koaflok (9.0 mg Al₂O₃/l), SiO₂ (3.0 mg SiO₂/l). After sedimentation new adjustment of pH and rapid filtration (9 m/h) through sand and gravel (column 0.6 m high and with sand and gravel 0.6 - 4 mm) is performed water quality with: pH = 7.08, consumption KMnO₄ = 7.2 mg/l, turbidity = 0.15 NTU uv-ext. = 0.041 1/cm, colour = 2 mg Pt/l, residual Al= 0.030 mg/l is obtained.

On the *Fig.* 4.1., and 4.2., some results of depandance degree of the organic matter reduction (consumption KMnO₄) and uv-extincion (as parameters water quality) in function of doses koaflok are given.

On the fig. 4.3. effectivity of reduction of dissolved organic matter (consumption KMnO₄) for different schems of raw water purification from lake Divcibare (1 with Al sulphate, 2-with Koaflok, and 3- Koaflok with auxiliary coagulant), obtained on the jar test is presented.

## Claims

1. Procedure for effective removal of humic matter from raw waters having different characteristics, using a conventional coagulation process, even with the least favourable conditions of water, in order to obtain drinking water, wherein
a) maintaining pH in the optimum range between 5.5 to 6.5, according to type of water, is achieved:
- for raw waters with low mineralization, as required according to raw water pH, by mineral acid dosage;
- for raw waters where the possibility for degradation of ionic content and water quality exists, by passage of a part of the water through H⁺ resin,
b) selection of optimum doses of coagulants is carried out in the application phase, the optimum doses of coagulants ranging between 2-25 mg Al₂O₃/dm³ for Al polymer and activated SiO₂ by weight ratio to Al₂O₃, the weight ratio Al₂O₃:SiO₂ being between 6:1 and 3:1,
a posteriori pH correction is realized by adding Ca(OH)₂, with or without CO₂, as usually applied by conventional methods for this control in water supply practice.

## Patentansprüche

1. Verfahren für wirksames Entfernen von Huminstoffen aus Rohwässern mit verschiedenen Merkmalen unter Verwendung eines konventionellen Koagulationsverfahrens, sogar mit den am wenigsten günstigen Bedingungen für Wasser, um Trinkwasser zu erhalten, wobei
a) das Aufrechterhalten des pH in dem optimalen Bereich zwischen 5,5 bis 6,5, gemäß dem Wassertyp, erreicht wird:
- für Rohwässer mit geringer Mineralisierung, wie es gemäß dem Rohwasser-pH erforderlich ist, durch Mineralsäurezudosierung,
- für Rohwässer, bei denen die Möglichkeit zur Herabsetzung der ionischen Inhaltsstoffe und Wasserqualität besteht, durch Hindurchleiten eines Teils des Wassers durch ein H⁺-Harz,
b) die Auswahl der optimalen Dosen von Koagulationsmitteln in der Anwendungsphase durchgeführt wird, wobei die optimalen Dosen von Koagulationsmitteln im Bereich zwischen 2-25 mg Al₂O₃/dm³ für ein Al-Polymer liegt und für aktiviertes SiO₂, definiert als Gewichtsverhältnis zu Al₂O₃, das Gewichtsverhältnis Al₂O₃:SiO₂ zwischen 6:1 und 3:1 liegt,
eine a posteriori pH-Korrektur realisiert wird, indem Ca(OH)₂ mit oder ohne CO₂ hinzugefügt wird, wie es üblicherweise bei konventionellen Verfahren für diese Kontrolle in der Wasserversorgungspraxis angewandt wird.

## Revendications

1. Mode opératoire pour une élimination efficace de matières humiques d'eaux non traitées présentant différentes caractéristiques, par un procédé de coagulation classique, même dans les conditions d'eau les moins favorables, afin d'obtenir de l'eau potable, dans lequel
a) on réalise le maintien du pH dans le domaine optimal de 5,5 à 6,5, selon le type d'eau :
- pour des eaux non traitées présentant une faible minéralisation, en fonction du pH de l'eau non traitée, par un dosage avec un acide minéral ;
- pour des eaux non traitées dans lesquelles il existe une possibilité de dégradation de la teneur ionique et de la qualité de l'eau, par passage d'une partie de l'eau à travers une résine H⁺,
b) on réalise le choix des doses optimales de coagulants dans la phase d'application, les doses optimales de coagulants s'échelonnant entre 2 et 25 mg de Al₂O₃/dm³ pour un polymère d'Al et du SiO₂ activé en rapport en poids à Al₂O₃, le rapport en poids Al₂O₃:SiO₂ étant compris entre 6:1 et 3:1,
on réalise une correction du pH a posteriori en ajoutant du Ca(OH)₂, avec ou sans CO₂, comme appliqué par des procédés classiques pour ce contrôle dans la pratique d'alimentation en eau.
